# EUROPEAN PATENT APPLICATION

(11) **EP 4 772 332 A1**
(43) Date of publication of application: **08.07.2026**
(21) Application number: 25211915.1
(22) Date of filing: 29.10.2025
(51) Int. Cl.: B29C 70/12, B29C 70/14, B29D 99/00, B64C 1/06

(54) **RADIUS FILLER COMPRISING A RECYCLED DRY FIBER MATERIAL AND METHOD**

(30) Priority: 07.01.2025 US 202519011854
(71) Applicant: The Boeing Company, Arlington, VA 22202 (US)
(72) Inventor: Hart, Marcus Charles, Arlington, VA, 22202 (US); Loesche, Christopher Robert, Arlington, VA, 22202 (US)
(74) Representative: Hoffmann Eitle

(57) **Abstract**

A composite material assembly (20) comprises at least one composite material assembly member (22, 24, 26) comprising a dry fiber material impregnated with an epoxy resin-containing material. Said at least one assembly member (22, 24, 26) comprises a first side (22a, 24a, 26a); a second side (22b, 24b, 26b); and a longitudinal radius filler cavity (28) bounded by the second side (22b, 24b, 26b), said cavity (28) comprising a cavity radius. The composite material assembly (20) further comprises a tailorable composite material longitudinal radius filler (30) positioned within the cavity (28), said radius filler (30) comprising a radius dimensioned to substantially match the cavity radius, said radius filler (30) comprising a recycled dry fiber material (40) impregnated with the epoxy resin-containing material (42).

## Description

### TECHNOLOGICAL FIELD

The present disclosure relates generally to the field of composite filler members. More specifically the present disclosure relates to the field of composite filler members that include elongated fibers that are shaped into two or more sections along a length.

### BACKGROUND

Composite structures are used in a wide variety of applications due to their high strength-to-weight ratio, corrosion resistance, and other favorable properties. In aircraft construction, composites are used in increasing quantities to form the fuselage, wings, horizontal and vertical stabilizer, and other components. For example, the wing of an aircraft may be formed of composite skin panels co-cured or co-bonded to internal composite structures such as composite stringers. The composite stringers may extend along a spanwise direction from the wing root to the wing tip.

Composite materials are tough, lightweight materials created by combining two or more functional components. For example, a composite material may include reinforcing fibers bound in polymer resin matrix. In thermoset composites, fibers and resins are arranged and cured to form a composite material. When composite structural members are joined together, gaps or voids may be present along bond lines between the members due to the geometric shapes of the members. These gaps/voids may need to be filled in order to increase the strength of the composite assembly. The gaps/voids may comprise an internal radius. A composite radius filler member can be applied to fill the gaps/voids. The composite radius filler member can include various shapes that match the gaps and are often referred to as "noodles".

Unless explicitly identified as such, no statement herein is admitted as prior art merely by of such statement's inclusion in the Technological Field and/or Background section.

### SUMMARY

According to present aspects, non-crimped fabric from previous resin infusion ply kitting processes is harvested, re-formed, and otherwise recycled into a tailored composite radius filler member, or "noodle" having imparted and selected characteristics and material compatibility with composite material assemblies and structures (that can include, for example, stringer fabrication on wing, empennage, and fuselage structures on aircraft, etc.) being reinforced by the inclusion of the tailored composite radius filler member.

A present aspect is directed to a composite material assembly for an aircraft assembly comprising at least one composite material assembly member comprising a dry fiber material impregnated with an epoxy resin-containing material, with the at least one composite material assembly member comprising a composite material assembly member first side, a composite material assembly member second side, and a longitudinal radius filler cavity bounded by the composite material member second side, said longitudinal radius filler cavity comprising a longitudinal cavity radius. The composite material assembly for an aircraft assembly further comprises a tailorable composite material longitudinal radius filler positioned within the longitudinal radius filler cavity, with the tailorable composite material longitudinal radius filler comprising a tailorable composite material longitudinal radius filler radius dimensioned to substantially match the longitudinal cavity radius, and with the tailorable composite material longitudinal radius filler comprising a recycled dry fiber material impregnated with the epoxy resin-containing material.

In another present aspect the recycled dry fiber material in the tailorable longitudinal radius filler (or simply "radius filler" in the following) is substantially identical to the dry fiber material in the at least one composite material assembly member ("assembly member").

In another present aspect the recycled dry fiber material in the tailorable longitudinal radius filler is a dry fiber non-crimp fabric material

In another present aspect, the composite material assembly is a curable composite material assembly, with the curable composite material assembly comprising the longitudinal radius filler cavity, and a curable tailorable composite material longitudinal radius filler dimensioned to completely fill the longitudinal radius filler cavity.

In another present aspect, the composite material assembly is a cured composite material assembly, with the cured composite material assembly comprising at least one cured composite material member comprising a first stiffness, and a cured tailored composite material longitudinal radius filler comprising a second stiffness.

In another present aspect, the recycled dry fiber material in the tailorable longitudinal radius filler is harvested from waste dry fiber material.

In another present aspect, the recycled dry fiber non-crimp fabric material in the tailorable longitudinal radius filler comprises re-spun recycled dry fiber yarn aligned to the longitudinal axis of the longitudinal radius filler cavity.

In another present aspect, the recycled dry fiber material in the tailorable longitudinal radius filler is derived from dry fiber material chopped segments.

In another present aspect, the composite material assembly comprises a first stiffness value-to-second stiffness value ratio ranging from about 1:6 to about 6:1.

In another present aspect, the first stiffness is greater than the second stiffness.

In another present aspect, the first stiffness is less than the second stiffness.

In another present aspect, the first stiffness value differs from the second stiffness value.

In another present aspect, the first stiffness value is substantially equivalent to the second stiffness value.

Another present aspect is directed to an aircraft assembly that can be an aircraft stringer assembly, with the aircraft assembly comprising a composite material assembly according to any one of the above aspects.

Another present aspect is directed to an aircraft comprising a composite material assembly according to any one of the above aspects.

A further present aspect is directed to a method for forming a tailorable composite material longitudinal radius filler, with the method comprising harvesting an amount of waste dry fiber material from a separate composite material formation process, forming a recycled dry fiber material from the waste dry fiber material, tooling the recycled dry fiber material to form the tailorable composite material longitudinal radius filler, impregnating the tailorable recycled dry fiber material with a resin-containing material to form a curable tailorable composite material longitudinal radius filler, and curing the curable tailorable composite material longitudinal radius filler to form a cured composite material longitudinal radius filler configured to comprise a selected stiffness.

In another present aspect, the method further comprises tailoring the curable tunable composite material longitudinal radius filler to form a cured composite material longitudinal radius filler comprising a selected stiffness value ranging from about 1:6 to about 6:1.

In another present aspect, the method further comprises forming a dry fiber material yarn from the waste dry fiber material, and orienting the dry fiber material yarn along a longitudinal axis during tooling to form the tailorable composite material longitudinal radius filler.

Another present aspect is directed to the method comprising forming a tailorable composite material longitudinal radius filler with the method comprising harvesting an amount of waste dry fiber material from a separate composite material formation process, forming a recycled dry fiber material from the waste dry fiber material, tooling the recycled dry fiber material to form the tailorable composite material radius filler, impregnating the tailorable recycled dry fiber material with a resin-containing material to form a curable tailorable composite material longitudinal radius filler, and curing the curable tailorable composite material longitudinal radius filler to form a cured composite material longitudinal radius filler configured to comprise a selected stiffness.

A further present aspect is directed to a method of making a tailorable composite material assembly comprising a tailorable composite material longitudinal radius filler, with the method comprising providing at least one composite material assembly member, with the at least one composite material assembly member comprising a composite material assembly member first side and a composite material member second side, with the composite material member comprising a longitudinal radius filler cavity bounded by the composite material member second side of the at least one composite material assembly member, with the longitudinal radius filler cavity comprising a longitudinal cavity radius, and with the at least one composite material assembly member comprising a first stiffness value, said composite material assembly member comprising a dry fiber material impregnated with a resin-containing material to form the composite material assembly member. The method further comprises positioning a tailorable composite material longitudinal radius filler in the longitudinal radius filler cavity to form the tailorable composite material assembly, with the tailorable composite material longitudinal radius filler comprising a recycled dry fiber material impregnated with a resin-containing material to form the tailorable composite material longitudinal cavity filler, with the tailorable composite material longitudinal radius filler comprising a radius filler longitudinal radius configured to substantially match the longitudinal cavity radius, with the tailorable composite material longitudinal radius filler configured to completely fill the longitudinal radius filler cavity, and with the tailorable composite material longitudinal radius filler comprising a second stiffness value, and wherein the recycled dry fiber material comprises a tailored form of the dry fiber material.

In another present aspect, the first stiffness value is equivalent to the second stiffness value.

In another present aspect, the first stiffness value is substantially equivalent to the second stiffness value.

In another present aspect, the first stiffness value is different from the second stiffness value.

In another present aspect, the dry fiber material in the composite material assembly member and the recycled dry fiber material in the tailorable composite material longitudinal radius filler is derived from the same dry fiber material starting material.

In another present aspect, the method further comprises tailoring the material composition of the tailorable composite material longitudinal radius filler to obtain the second stiffness value.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present aspects;
FIG. 2 is a cross-sectional side view of an aircraft assembly comprising a longitudinal radius filler cavity, according to present aspects;
FIG. 2A is an enlarged cross-sectional side view of the aircraft assembly of the type shown in FIG. 2;
FIG. 3 is a cross-sectional side view of an aircraft assembly comprising a longitudinal radius filler in position within the longitudinal radius filler cavity, according to present aspects;
FIG. 3A is an enlarged cross-sectional side view of the aircraft assembly of the type shown in FIG. 3;
FIG. 4A is an illustration of a dry fiber material form to be recycled, according to present aspects;
FIG. 4B is an illustration of a dry fiber material form to be recycled, according to present aspects;
FIG. 4C is an illustration dry fiber material being recycled from waste dry fiber material into a waste dry fiber material fuzz ball as a recycled dry fiber material precursor in an intermediate recycling step, according to present aspects;
FIG. 4D is an illustration of a recycled dry fiber material yarn strand made from the waste dry fiber material fuzz ball shown in FIG. 4C, according to present aspects;
FIG. 4E is an illustration of a recycled dry fiber material yarn strand spun being formed onto a take-up roll, according to present aspects;
FIG. 4F is an enlarged partial view of the recycled dry fiber material strand spun onto the take-up roll as shown in FIG. 4E, according to present aspects;
FIG. 5A is an elevated partial view of a tunable composite material longitudinal radius filler mold for forming the recycled composite material radius filler, according to present aspects;
FIG. 5B is an elevated partial view of a tunable recycled dry fiber material in chopped form located in the tunable composite material longitudinal radius filler mold shown in FIG. 5A, according to present aspects;
FIG. 5C is an illustration of the tunable recycled composite material longitudinal radius filler made from chopped dry fiber material removed from the tunable composite material longitudinal radius filler mold shown in FIG. 5A, according to present aspects;
FIG. 5D is an illustration a perspective end view of the tunable recycled composite material longitudinal radius filler of the type shown in FIG. 5C showing a longitudinally triangular geometric radius filler dimension that can be dimensioned to substantially match a longitudinal radius filler cavity in a composite material assembly, according to present aspects;
FIG. 6A is an elevated partial view of a tunable recycled dry fiber material in in re-spun recycled dry fiber yarn form positioned into the tunable composite material longitudinal radius filler mold shown in FIG. 5A, according to present aspects;
FIG. 6B is an illustration of the tunable recycled dry fiber material in in re-spun recycled dry fiber yarn form removed from the mold and formed into the tunable composite material longitudinal radius filler, according to present aspects;
FIG. 6C is an illustration a perspective end view of the tunable recycled composite material longitudinal radius filler of the type shown in FIG. 6B showing a longitudinally triangular geometric radius filler dimension that can be dimensioned to substantially match a longitudinal radius filler cavity in a composite material assembly, according to present aspects;
FIG. 7A is a plan view of recycled dry fiber material in position in a tunable composite material longitudinal radius filler mold of the type shown in FIG. 5, and positioned within a curing bag, according to present aspects;
FIG. 7B is a side/end view of the recycled dry fiber material of the type shown in FIG. 7A in position in a tunable composite material longitudinal radius filler curing bag, according to present aspects;
FIG. 8 is a flowchart outlining a present method, according to present aspects;
FIG. 9 is a flowchart outlining a present method, according to present aspects;
FIG. 10 is a flowchart outlining a present method, according to present aspects; and
FIG. 11 is a flowchart outlining a present method, according to present aspects.

### DETAILED DESCRIPTION

Composite material assemblies comprising an inevitable gap between composite material assembly members joined and/or formed together to form the assembly can have a lengthwise or longitudinal gap or cavity formed along the length of the composite material assembly that can be filled by a radius filler to fill the cavity. According to present aspects, dry fiber material is harvested and/or otherwise derived from other composite material formation processes as waste material and is recycled and reformed for use in the formation of tailorable composite material longitudinal radius filler to have intentionally tailored properties as the recycled dry fiber material can be aligned and/or otherwise oriented within a formed radius filler to achieve selected tailored properties including, for example, a radius filler stiffness that can be selected to be equivalent or substantially equivalent to, or different from (e.g., greater than or less than) the stiffness of a composite material assembly member that surrounds the radius filler. "Dry" fiber refers to fiber that is not impregnated with a resin or other material and is in a state that is devoid of perceptible moisture.

When the harvested dry fiber waste material is harvested from manufacturing processes of associated composite material assembly member (that are to be combined with the present radius fillers to form a completed composite material assembly with an associated radius filler), the dry fiber material in both the radius filler and the surrounding composite material assembly member can, according to present aspects, result in significantly increased material compatibility between the assembly member and the radius filler. The dry fiber material can be and/or can comprise, for example, a dry fiber non-crimp fabric material from previous resin infusion ply kitting processes that would otherwise become waste product; and instead, according to present aspects, is harvested, re-formed, and otherwise recycled into a tailored composite material longitudinal radius filler, or "noodle", having intentionally imparted and intentionally selected physical characteristics and intentionally selected material compatibility with surrounding and immediately adjacent composite material assembly members and structures to form, for example, composite material assemblies (that can include, for example, stringer fabrication on wing, empennage, fuselage, etc., structures on aircraft, etc.). The intentional modification of the radius filler formation processes to include recycled dry fiber material can increase design flexibility for reinforcing a composite material assembly through the inclusion of the tailored composite radius filler to form a finished, completed composite material assembly.

In one example, and according to present aspects, heightened overall material processing efficiency and economy of material and commensurate cost savings is achieved by harvesting, reforming, and recycling the same dry fiber material ( that, in one example can be, but is not limited to a non-crimped fabric, or NCF) used to form an associated composite material structure. The recycled dry fiber material is then used for the fabrication of a radius filler structure that will be incorporated with and/or infused into and/or within a void (e.g., a longitudinal cavity, etc.) within an associated and surrounding composite material structure for the purpose of "filling" the cavity to form a radius filler reinforced composite material assembly.

The recycled material used to form the radius filler can be re-formed and then "tailored" or "tuned" to impart a selected strength, stiffness, and/or other physical characteristic such that, for example, the stiffness of the radius filler formed from the recycled material intentionally can be configured to have a selected stiffness that is selected to be greater than or less than or that is selected to be substantially equivalent to and substantially "match" the stiffness of the surrounding composite material structure into which the radius filler is inserted.

The same dry fiber material used to manufacture the associated composite material structure (that presents a void/cavity to be filled by the radius filler) is used as recycled material in the manufacture of, and otherwise to form, the radius filler. That is, scrap dry fiber material from scrap or "waste" ply kitting used in the manufacture of other composite material structures is intentionally harvested, re-formed, and recycled, and otherwise repurposed for use as the dry fiber material that is incorporated into the presently disclosed composite material radius fillers. Ply kitting is the sorting and sequencing of fiber plies; effectively putting them into a selected fiber orientation or weave order. According to present aspects, the recycled "waste" dry fiber material can be "re-ordered", "re-oriented", "re-aligned", etc. to form a dry fiber material that is therefore "tuned" ,and/or "tailored" to comprise a selected physical characteristic, and/or set of physical characteristics that are selectively adjusted and/or selectively and predictably "tuned" and/or selectively and predictably "tailored" to achieve a selected physical characteristic value and/or value range.

According to a present aspect, a tunable and/or tailorable physical characteristic is material stiffness. In one present example, the present composite material radius fillers can be tailored and/or tuned during their manufacture to possess a resulting stiffness characteristic that can substantially match a composite material structure (comprising a cavity), into which the radius filler is positioned to form a composite material assembly that can be, for example, an aircraft wing stringer assembly, etc.

In other present examples, the present composite material radius filler can be selectively and predictably tailored and/or tuned during their manufacture, at least through the realignment and positioning of the dry fiber forms and dry fiber segments, to impart to the formed radius filler a resulting stiffness characteristic that can be greater than or that can be less than a surrounding composite material structure and/or incomplete assembly (comprising a cavity), into which the radius filler is positioned to form a completed composite material assembly that can be, for example, an aircraft wing stringer assembly, etc.

In this way, according to present aspects, the overall characteristics of a resulting composite material assembly (that comprises a radius filler within a surrounding composite material assembly member or sub-assembly or assembly precursor) can be selectively and predictably adjusted by selectively and predictably adjusting, during manufacture, a physical characteristic (e.g., stiffness) of the composite material radius filler by tailoring the amount, orientation, form, length and/or width of the recycled dry fiber material in the formation of the present composite material radius filler, while using harvested and "scrap" material that is the same dry fiber material that is: 1) used to manufacture the composite material structure(s) surrounding a longitudinal radius cavity (e.g., a void) to be filled; and that is also 2) used in the manufacture of the composite material longitudinal radius filler that is then used to fill the longitudinal radius cavity. In addition, the same dry fiber material can be handled, processed, re-formed, and otherwise employed as the composite material starting material in a composite material manufacturing regimen similar to the composite material manufacturing regimen used to make the composite material assembly members that surround the composite material radius filler.

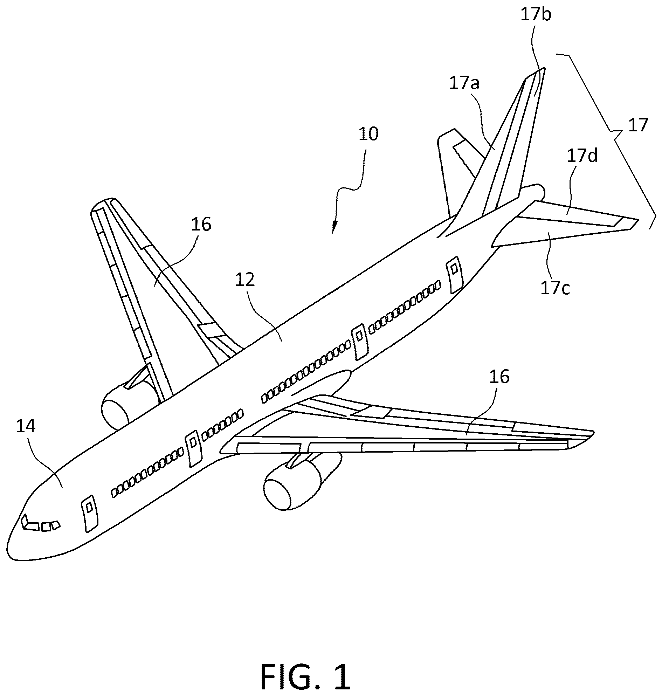

FIG. 1 is an illustration of a vehicle in the form of an aircraft 10 comprising a fuselage 12, a cockpit 14, wings 16, and a tail assembly 17 (referred to equivalently as an "empennage") with the tail assembly comprising vertical stabilizer 17a, rudder 17b, horizontal stabilizer 17c, elevator 17d.

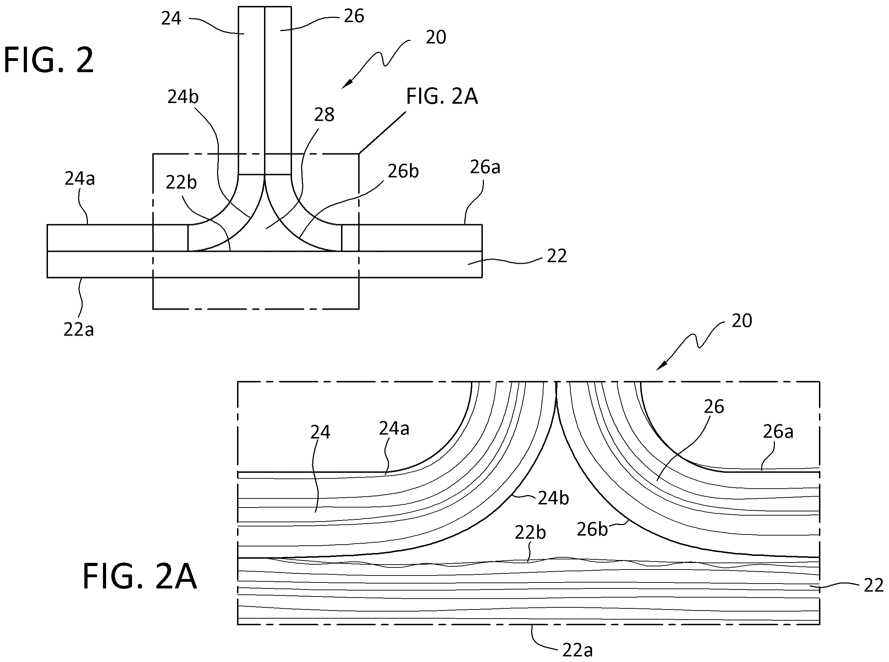

FIG. 2 is a cross-sectional side view of a composite material assembly 20 that can be, for example, an aircraft assembly within a wing that can be, for example, a stringer assembly made from multiple component parts, or "members". Assemblies can have more or less than two component members, such that that the illustration shown in FIG. 2 is a non-limiting illustration. As shown in FIG. 2, composite material assembly 20 comprises a first composite material assembly member 22, comprising first composite material assembly member first side 22a (shown as an "exterior surface"), first composite material assembly member second surface 22b (shown as an "interior surface). Composite material assembly 20 further comprises second composite material assembly member 24 (joined to first composite material assembly member 22), comprising second composite material assembly member first side 24a (shown as an exterior surface), and second composite material assembly member second side 24b (shown as an interior surface). Composite material assembly 20 further comprises third composite material assembly member 26 (joined to both first composite material assembly member 22 and second composite material assembly member 24), with third composite material assembly member 26 comprising third composite material assembly member first side 26a (shown as an exterior surface), and third composite material assembly member second side 26b (shown as an interior surface).

In one example, in combination, the composite material assembly first, second and third members 22, 24, 26 are joined together to form the composite material assembly 20 that, when in the form of, for example, an aircraft wing stringer, has a longitudinal length. As shown in FIG. 2, at the area of the joined juncture of the members 22, 24, 26, the interior surfaces (e.g., the first sides) of the three joined members (as shown in FIG. 2, the first composite material assembly member second side 22b, second composite material assembly member second side 24b, and third composite material assembly member second side 26b) together surround a longitudinal radius filler cavity 28 that extends through the length of the composite material assembly 20. FIG. 2A is an enlarged cross-sectional side view of the composite material assembly 20 shown in FIG. 2, and showing an enlarged view of longitudinal radius filler cavity 28.

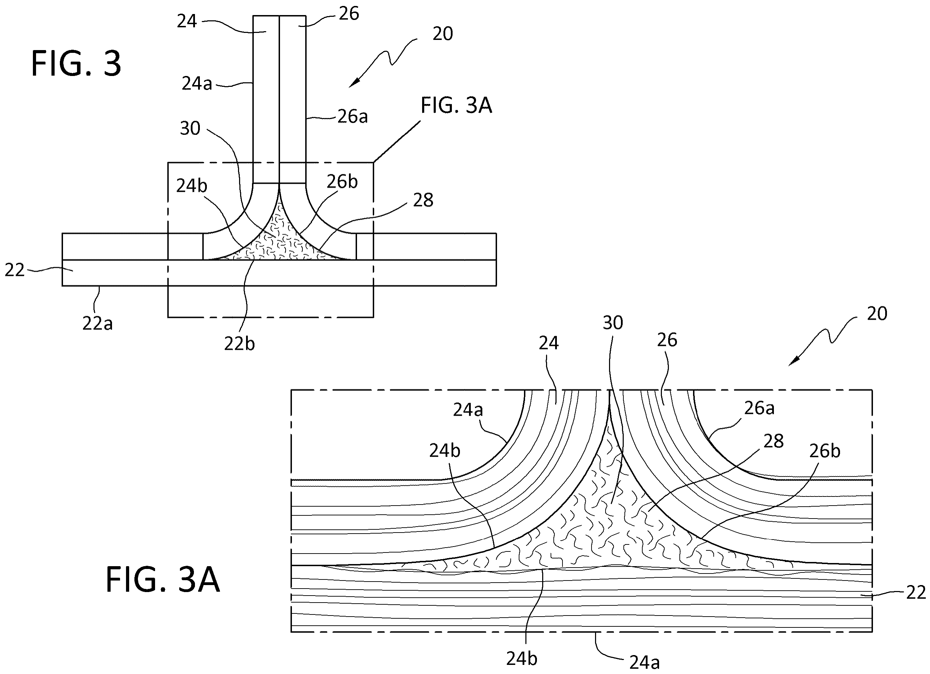

FIG. 3 is a cross-sectional side view of the composite material assembly 20 shown in FIG. 2, and comprising similarly numbered features to that shown in FIG. 2, and with a tailored composite material longitudinal radius filler 30 (referred to equivalently herein as a tailored composite material longitudinal void filler 30) now present within the composite material assembly 20, and with the tailored composite material longitudinal radius filler 30 dimensioned to substantially completely fill and otherwise completely occupy the longitudinal radius filler cavity 28. FIG. 3A is an enlarged cross-sectional side view of the composite material assembly 20 shown in FIG. 3, and showing an enlarged view of longitudinal radius filler cavity 28 now substantially completely occupied and otherwise "filled" by the tuned composite material longitudinal radius filler 30.

According to present aspects, the present tailored composite material radius fillers can be dimensioned and used in the fabrication of resin infused composite material assembly and structures that use radius fillers to occupy and otherwise "fill" longitudinal voids such as, for example, stringer stiffened structures on aircraft. In addition, the recycled dry fiber material (that can also be composite material dry fiber non-crimp fabric (NCF) material, can be the same dry fiber "form" (e.g., strips, chopped segments also referred to herein as "postage stamp sized segments" and/or "postage stamps, etc.), as the material form used in the adjoining composite material assembly members.

According to present aspects, using the same dry fiber material for both the composite material structure to be filled and also for the radius filler achieves a significantly enhanced compatibility, (e.g., after curing, etc.) between the radius filler, and the composite material structure (e.g., the adjoining composite material members that, together with, the composite material radius filler form the composite material assembly) throughout the entirety of the composite material assembly that incorporates the structure to be filled and the radius filler. That is, when combined together, the composite material assembly members (combined to form a cavity to be filled) and the radius filler in position within the cavity together form the composite material assembly referred to herein.

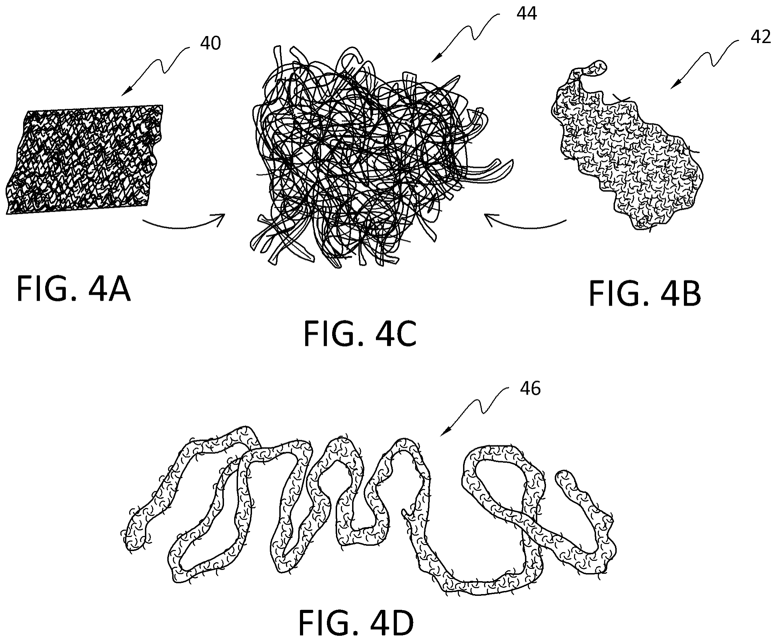

FIG.4A is an illustration of a source of waste dry fiber material to be harvested, recycled, repurposed, and re-formed, according to present aspects. FIG. 4A shows a dry fiber segment or dry fiber "postage stamp" segment 40. FIG. 4B shows a source of waste dry fiber material to be harvested, recycled, repurposed, and re-formed, according to present aspects, in the form of discarded dry fiber material strand bundle 42.

According to present aspects, recycled dry fiber waste material for use in the preparation of composite material longitudinal radius fillers can be repurposed such that, for example, the waste material that is the "source" of the recycled dry fiber material can be further processed through subsequent "chopping", in the case of the "postage stamps, or the harvested dry fiber waste material can undergo recycling treatment where the fiber material from a dry fiber source is extracted from the waste material and is re-spun into a new segment of dry fiber yarn, for example. FIG. 4C shows a re-spun yarn pre-cursor 44 (in the form of a "fuzz" ball) that comprises extracted dry-fiber segments to be re-spun into dry fiber yarn, according to present aspects. FIG. 4D is an enlarged illustration of an extracted segment of dry fiber that is extracted from (e.g., harvested from) a segment of waste dry fiber material.

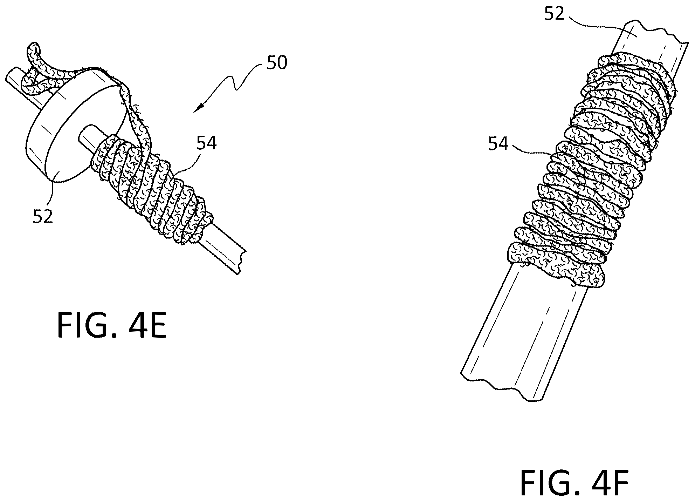

Various non-limiting re-spinning techniques re-spinning processes can be employed to convert the waste dry material fiber together into a re-spun dry fiber yarn of the type shown at least in FIGs. 4E and 4F. FIG. 4E shows a partial view of a re-spun recycled dry fiber material yarn assembly 50 comprising a take up spindle 52 that can be rotated to "take up" a length of re-spun dry fiber yarn 54. FIG.4F is an enlarged partial view of the dry fiber material yarn 54 on the take up spindle 42.

As mentioned herein, the waste dry fiber material can be in the form of chopped segments (the chopped segments referred to equivalently herein as "postage stamps") or waste dry fiber material in another form can be processed into dry-fiber material postage stamp segments and further processed (e.g., further "chopped") to alter the dimension of the postage stamp segments for purposes of aligning the segments into a mold for the formation of the present composite material longitudinal radius filler comprising the recycled dry fiber material.

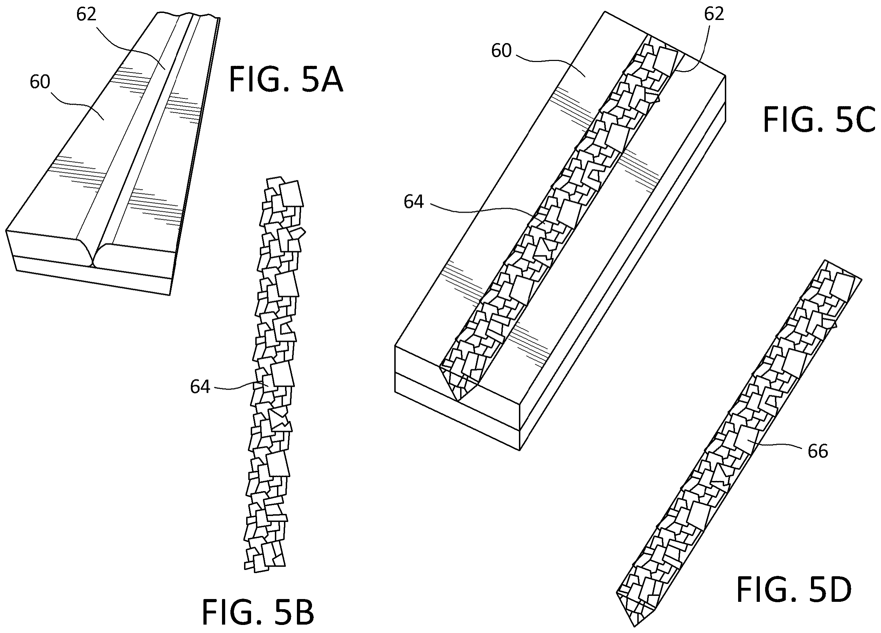

FIG. 5A is an illustration of a partial view of a composite material longitudinal radius filler mold 60 (referred to equivalently herein as the "radius filler mold") that comprises a tooled feature 62 in the form of a substantially linear and longitudinal triangular depression into which recycled dry fiber material is inserted to form or "mold", in the presence of heat and pressure, a presently disclosed composite material longitudinal dry fiber radius filler (referred to equivalently herein as the "radius filler"). According to present aspects, physical characteristics of the molded radius filler can be selectively tailored or selectively "tuned" into the radius filler that is produced by, for example, supplying altered or re-purposed waste dry fiber material that is further selectively aligned into the radius filler mold.

In one example, as shown in FIG. 5B, an amount of harvested dry fiber material waste in the form of or shaped into the form of dry fiber material postage stamps can be configured into a slightly compressed state in a substantially longitudinal orientation as a recycled dry fiber radius filler precursor 64 prior to presenting the recycled dry fiber radius filler to the radius filler mold 60. In another example, the recycled dry fiber radius filler precursor 64 may not hold a form and may not be slightly compressed prior to presentation of the recycled dry fiber radius filler precursor 64 to the mold.

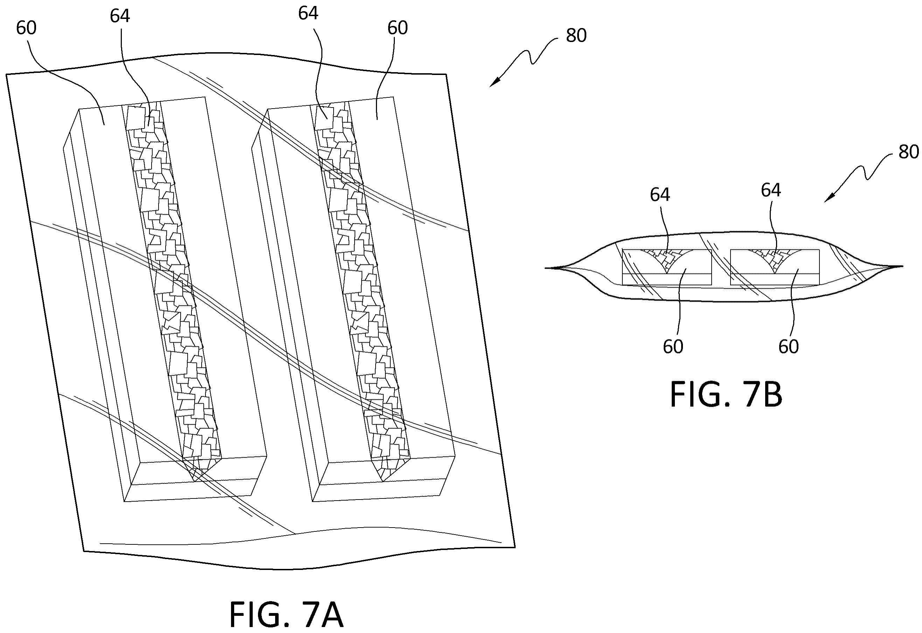

As shown in FIG. 5C, and according to one present example, the recycled dry fiber radius filler precursor 64 is introduced to the composite material recycled dry fiber material mold 60 to slightly exceed the dimension of and otherwise "fill" the tooled feature 62 of the composite material recycled dry fiber material mold 60. IN one example, after application of heat and pressure in a "bagged" exemplary process shown in FIGs 7A and 7B, the recycled composite material dry fiber radius filler 66 that can be dimensioned to substantially fill a composite material assembly cavity is removed from the mold, and is shown in FIG. 5D as having a substantially triangular shape along its length (e.g., longitudinally).

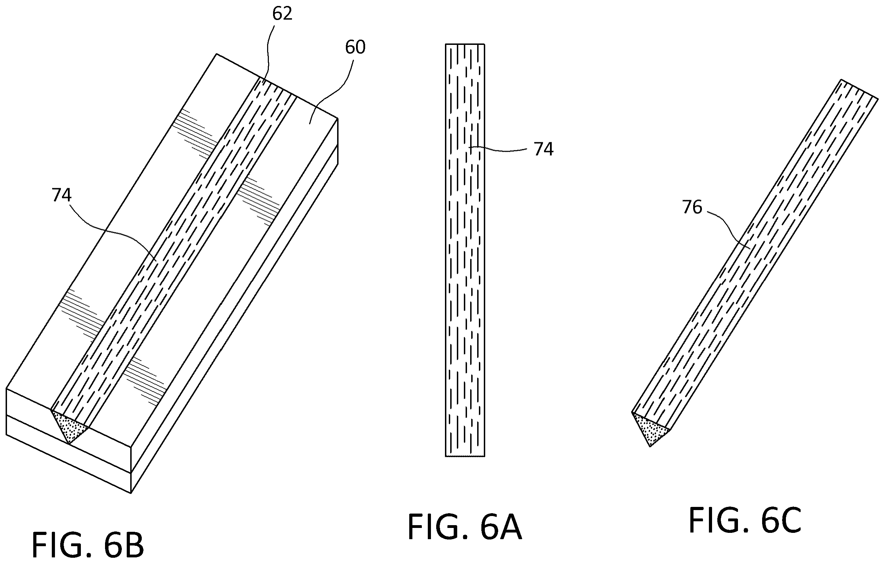

FIGs. 6A, 6B, and 6C show recycled composite material dry fiber radius filler formation, according to present aspects, when the recycled dry fiber radius filler precursor 64 is in the form of re-spun recycled dry fiber material yarn 54 that can be oriented to be recycled dry fiber radius filler precursor 64 in the form of aligned re-spun recycled dry fiber material yarn 74.

As shown in FIG. 6A, an amount of harvested dry fiber material waste in the form of recycled dry fiber yarn radius filler precursor 74 can be configured into a slightly compressed state to at least temporarily "hold its form" with the fiber strands in the yarn aligned in a substantially longitudinal orientation as the recycled dry fiber yarn radius filler precursor 74 prior to presenting the recycled dry fiber yarn radius filler precursor to the radius filler mold 60. In another example, the recycled dry fiber yarn radius filler precursor 74 may not hold a form and may not be slightly compressed prior to presentation of the recycled dry fiber yarn radius filler precursor 74 to the mold.

As shown in FIG. 6B, in one present example, the recycled dry fiber yarn radius filler precursor 74 is introduced to the composite material recycled dry fiber material mold 60 and can slightly exceed the dimension of and otherwise "fill" the tooled feature 62 of the composite material recycled dry fiber material mold 60. In one example, after application of heat and pressure in an exemplary "bagged" process shown in FIGs 7A and 7B, the recycled composite material dry fiber radius filler 76 that can be dimensioned to substantially fill a composite material assembly cavity is removed from the mold, and is shown in FIG. 6C as having a substantially triangular shape along its length (e.g., longitudinally).

As mentioned herein, the present recycled dry fiber radius filler formation process can incorporate a mold used to form a selected dimension of the radius filler that can be a selected final dimension. The recycled dry fiber material can be molded, removed from the mold and then cured according to a heat and pressure regimen within vacuum bag apparatus. Alternatively, the recycled dry fiber while still in a mold can be presented into a vacuum bag and subjected to a heat and pressure "in mold" curing regimen to cure the recycled dry fiber radius filler.

FIGs 7A shows an overhead view of an exemplary "bagging process" 80 with the recycled dry fiber radius precursor material 64 in mold 60, with both mold and precursor material contained within vacuum bag 82. FIG. 7B is a side or end view of the bagging process 80. In the bagging process 80, the recycled dry fiber radius filler precursor can be compressed and/or cured into a recycled composite material dry fiber radius filler that can be removed from the mold and inserted into a composite material assembly. In one present example, the recycled dry fiber radius filler precursor can be at least partially consolidated at this stage, with the radius filler subjected to subsequent additional curing steps, in situ, within the composite material assembly.

In another example, the at least partially and/or fully consolidated recycled radius filler can be co-curable with the composite material assembly member(s). According to present aspects, a "co-curable" material is defined as a material that can be co-cured with another material such that the two co-curable materials will co-cure when exposed to common curing conditions, such as those that can be imposed by a predetermined curing regimen (predetermined temperature, pressure, ramp up temperatures/rates, dwell periods, etc.) to form a "co-cured" composition.

Present aspects contemplate, but are not limited to, the use of recycled NCF harvested from composite material process scrap and repurposed as recycled dry fiber NCF that, according to present aspects can be formed into layers of dry fiber NCF with the layers then impregnated with, for example, an epoxy resin-based material to form a present composite material radius filler. In addition, present aspects contemplate the use of recycled dry fiber NCF harvested from composite material process scrap and repurposed as recycled dry fiber NCF that can be used to form composite material prepreg "sheets" comprising the recycled dry fiber NCF material impregnated with an epoxy resin-based to form the present composite material radius filler. Additional dry fiber materials can include dry fiber material containing carbon fibers, glass fibers, boron fibers, aramid fibers, natural fibers, and combinations thereof, etc.

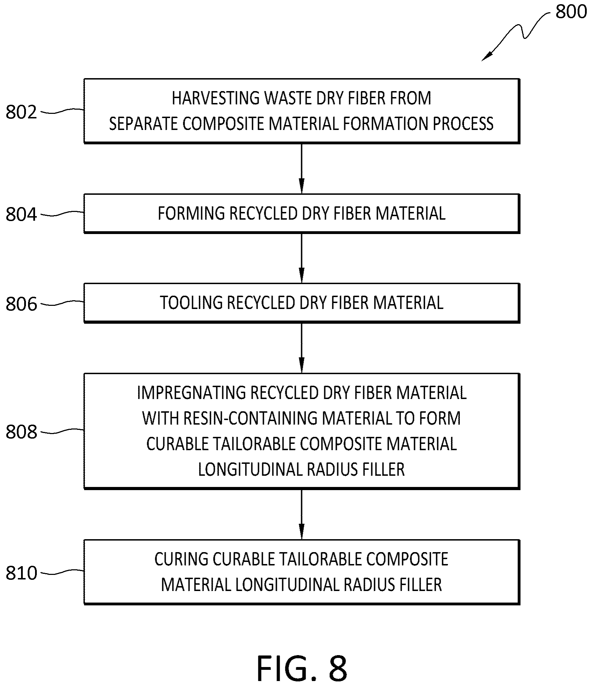

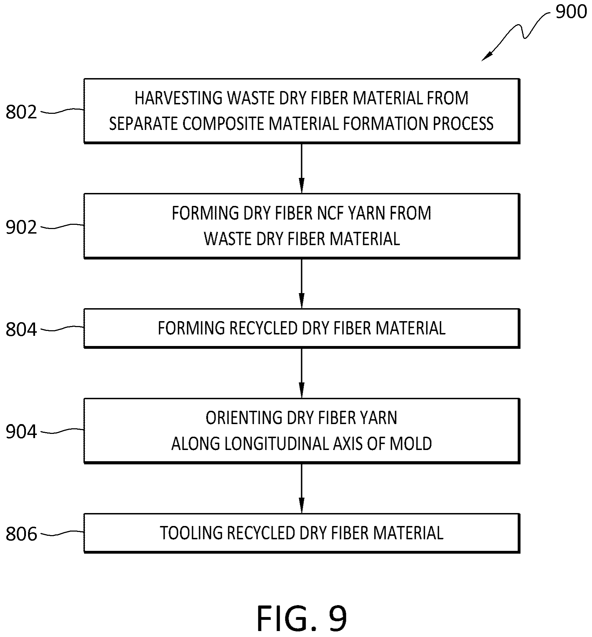

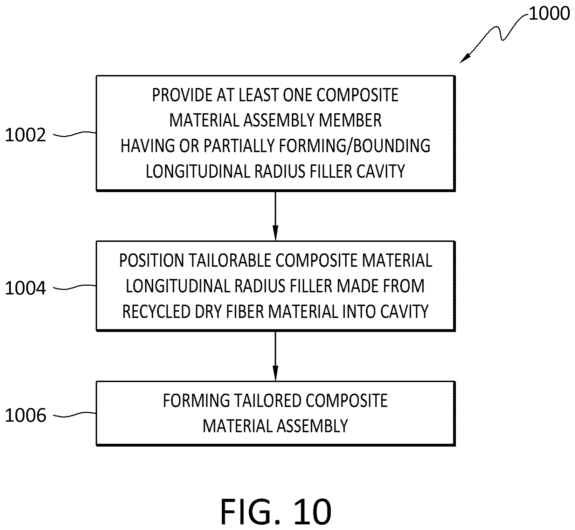

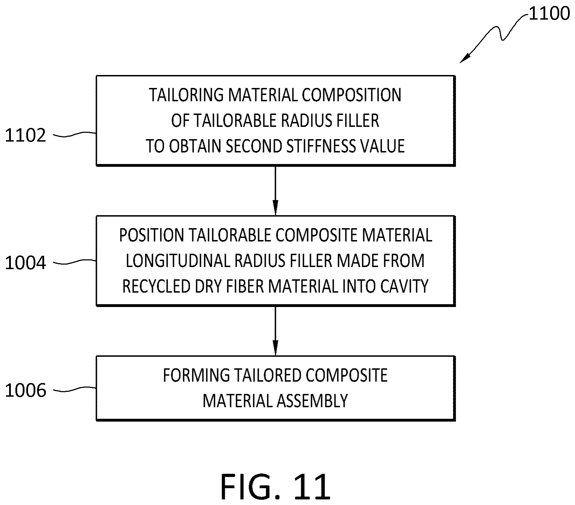

FIGs. 8, 9, 10, and 11 are flowcharts outlining present methods for making the recycled composite material dry fiber material radius filler (FIGs. 8 and 9), and methods for making the present composite material assembly comprising the recycled composite material dry fiber material radius filler, referred to equivalently herein as the "tailorable composite material longitudinal radius filler", (FIGs. 10 and 11).

According to present aspects, FIG. 8 outlines a method 800 for forming a tailorable composite material longitudinal radius filler, with the method 800 comprising harvesting 802 an amount of waste dry fiber material from a separate composite material formation process, and forming 804 a recycled dry fiber material from the waste dry fiber material. The method 800 further comprises tooling 806 the recycled dry fiber material to form the tailorable composite material radius filler,_and impregnating 808 the tailorable recycled dry fiber material with a resin-containing material to form a curable tailorable composite material longitudinal radius filler, and curing 810 the curable tailorable composite material longitudinal radius filler to form the present cured composite material longitudinal radius filler configured to comprise a selected stiffness.

In another present aspect, method 800 further comprises tailoring the curable tunable composite material longitudinal radius filler by orienting the recycled dry fiber material to form a cured composite material longitudinal radius filler comprising a selected stiffness. By varying the selected stiffness of the tailorable composite material longitudinal radius filler, the selected stiffness of the radius filler relative to the stiffness of the surrounding composite materials member(s) surrounding the radius filler (when the radius filler is in position within the radius filler cavity in the composite material assembly) a stiffness ratio of the radius filler to the composite material member can be established ranging from about 1:6 to about 6:1. In one present example, the stiffness of a carbon fiber with epoxy resin formed into the present radius filler can have a stiffness value ranging from about 3 MSI to about 21 MSI. In one present example, an empirical data point for an analytical stiffness assessment and/or stiffness calculation method can employ ASTM D3039 and ASTM D695 and analytical methods including the Rule of Mixture and Classical Laminate Theory.

In another present aspect, FIG. 9 outlines a method 900 for forming a tailorable composite material longitudinal radius filler that includes the elements of method 800, with method 900 further comprising forming 902 a dry fiber material yarn from the waste dry fiber material, and orienting 904 the dry fiber material yarn along a longitudinal axis during tooling to form the tailorable composite material radius filler.

FIG. 10 outlines a further present aspect directed to a method 1000 of making a tailorable composite material assembly comprising a tailorable composite material longitudinal radius filler, with the method 1000 comprising providing 1002 at least one composite material assembly member, with the at least one composite material assembly member comprising a composite material assembly member first side and a composite material member second side, and with the composite material member comprising a longitudinal radius filler cavity bounded by the composite material member second side, and with the longitudinal radius filler cavity comprising a longitudinal cavity radius, and with the at least one composite material assembly member comprising a first stiffness value. The composite material assembly member comprises a dry fiber material impregnated with a resin-containing material to form the composite material assembly member. The method 1000 further comprises positioning 1004 a tailorable composite material longitudinal radius filler in the longitudinal radius filler cavity to form the tailorable composite material assembly, and forming 1006 the composite material assembly now including thew radius filler, with the tailorable composite material longitudinal radius filler comprising a recycled dry fiber material impregnated with a resin-containing material to form the tailorable composite material longitudinal cavity filler, with the tailorable composite material longitudinal radius filler comprising a radius filler longitudinal radius configured to substantially match the longitudinal cavity radius, with the tailorable composite material longitudinal radius filler configured to completely fill the longitudinal radius filler cavity, and with the tailorable composite material longitudinal radius filler comprising a second stiffness value, and wherein the recycled dry fiber material comprises a tailored form of the dry fiber material, and wherein the first stiffness value is different from the second stiffness value.

As mentioned herein, an another present aspect, the dry fiber material in the composite material assembly member and the recycled dry fiber material in the tailorable composite material longitudinal radius filler is derived from the same dry fiber material starting material.

FIG. 11 outlines another present method, 1100 that includes the elements of method 1000, with method 1100 further comprising tailoring 1102 the material composition of the tailorable composite material longitudinal radius filler to obtain the second stiffness value.

The presently disclosed methods outlined in FIGs. 8 and 9 can implement the radius filler described herein and shown at least in FIGs. 3, 3A, 5B, 5C, 5D, 6A, 6B, 6C, 7A, and 7B. In addition, the methods outlined in FIG. 10 and 11 can implement the present composite material assembly disclosed herein and shown at least in FIGs, 1, 2, 2A, 3, 3A.

This illustration of aircraft 10 is provided for purposes of illustrating one environment in which a present composite radius filler member can be implemented. The illustration of aircraft 10 in FIG. 1 is not meant to imply architectural limitations to the manner in which different illustrative examples may be implemented. For example, aircraft 10 is shown as a commercial passenger aircraft. The different illustrative embodiments may be applied to other types of aircraft, such as private passenger aircraft, a rotorcraft, unmanned aircraft, manned spacecraft, unmanned spacecraft, manned rotorcraft, unmanned rotorcraft, satellites, rockets, missiles, manned terrestrial aircraft, unmanned terrestrial aircraft, manned surface water borne aircraft, unmanned surface water borne aircraft, manned sub-surface water borne aircraft, unmanned sub-surface water borne aircraft, and combinations thereof.

According to present aspects, the term "substantially" with reference to the various present aspects, means that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide. That is, in describing a physical characteristic or value herein that is termed as being "substantially equivalent", the physical characteristics or values are nearly equivalent.

The presented aspects can, of course, be carried out in other ways than those specifically set forth herein without departing from the scope of protection defined by the appended claims. The present aspects are to be considered in all respects as illustrative and not restrictive, and all changes coming within the scope of the appended claims are intended to be embraced therein.

## Claims

1. A composite material assembly (20) comprising:
- at least one composite material assembly member (22, 24, 26) comprising a dry fiber material impregnated with an epoxy resin-containing material, said at least one assembly member (22, 24, 26) comprising:
a first side (22a, 24a, 26a);
a second side (22b, 24b, 26b); and
a longitudinal radius filler cavity (28) bounded by the second side (22b, 24b, 26b), said cavity (28) comprising a cavity radius; and
- a tailorable composite material longitudinal radius filler (30) positioned within the cavity (28), said radius filler (30) comprising a radius dimensioned to substantially match the cavity radius, said radius filler (30) comprising a recycled dry fiber material (40) impregnated with the epoxy resin-containing material (42).

2. The composite material assembly of Claim 1, wherein the recycled dry fiber material (40) in the radius filler (30) is substantially identical to the dry fiber material in the at least one assembly member (22, 24, 26).

3. The composite material assembly of Claim 1 or 2, wherein the composite material assembly is a curable composite material assembly, said curable composite material assembly further comprising a curable tailorable composite material longitudinal radius filler dimensioned to completely fill the cavity (28).

4. The composite material assembly of Claim 1 or 2, wherein the composite material assembly comprises a cured composite material assembly, said cured composite material assembly comprising:
at least one cured composite material assembly member comprising a first stiffness; and
a cured tailored composite material longitudinal radius filler comprising a second stiffness.

5. The composite material assembly of Claim 4, further comprising a first stiffness to second stiffness ratio ranging from about 1:6 to about 6:1.

6. The composite material assembly of Claim 4, wherein said first stiffness is less than the second stiffness.

7. The composite material of Claim 4, wherein said first stiffness is substantially equivalent to said second stiffness.

8. The composite material assembly of any one of Claims 1-7, wherein said recycled dry fiber material
- is harvested from waste dry fiber fabric material;
- is a dry fiber non-crimp fabric material harvested from waste dry fiber non-crimp fabric material;
- comprises re-spun recycled fiber yarn aligned to a longitudinal axis of the longitudinal void; or
- is derived from recycled dry fiber material chopped segments.

9. An aircraft assembly or an aircraft comprising the composite material assembly of any one of Claims 1-8.

10. A method (800) for forming a tailorable composite material longitudinal radius filler (30), the method comprising:
harvesting (802) an amount of waste dry fiber material from a separate composite material formation process;
forming (804) a recycled dry fiber material from the waste dry fiber material:
tooling (806) the recycled dry fiber material to form the tailorable composite material longitudinal radius filler (30);
impregnating (808) the tailorable recycled dry fiber material with a resin-containing material to form a curable tailorable composite material longitudinal radius filler; and
curing (810) the curable tailorable composite material longitudinal radius filler to form a cured composite material longitudinal radius filler configured to comprise a selected stiffness.

11. The method (900) of Claim 10, further comprising:
forming (902) a dry fiber material yarn from the waste dry fiber material; and
orienting (904) the dry fiber material yarn along a longitudinal axis during tooling to form the tailorable composite material longitudinal radius filler (30),
optionally, wherein the recycled dry fiber material is a recycled dry fiber non-crimp fabric material.

12. A tailorable composite material longitudinal radius filler (30) made according to the method of Claim 10 or 11.

13. A method (1000) of making a tailorable composite material assembly comprising a tailorable composite material longitudinal radius filler (30), the method comprising:
providing (1002) at least one composite material assembly member (22, 24, 26), said at least one assembly member comprising a first side (22a, 24a, 26a) and a second side (22b, 24b, 26b), said composite material assembly further comprising a longitudinal radius filler cavity (28) bounded by the second side, said cavity (28) comprising a cavity radius, said at least one assembly member (22, 24, 26) comprising a first stiffness value, said at least one assembly member (22, 24, 26) comprising a dry fiber material impregnated with a resin-containing material to form the assembly member (22, 24, 26);
positioning (1004) a tailorable composite material longitudinal radius filler (30) in the cavity (28) to form the tailorable composite material assembly, said radius filler (30) comprising a recycled dry fiber material (40) impregnated with a resin-containing material to form the radius filler (30), said radius filler (30) comprising a radius configured to substantially match the cavity radius, said radius filler (30) configured to completely fill the cavity (28), said radius filler (30) comprising a second stiffness value; and
forming (1006) the composite material assembly;
wherein the recycled dry fiber fabric material comprises a tailored form of the dry fiber material; and
wherein a stiffness ratio of the first stiffness value to second stiffness value is a stiffness ratio ranging from about 1:6 to about 6:1.

14. The method of Claim 13, wherein the first stiffness value and the second stiffness value are substantially equivalent.

15. The method (1100) of Claim 13 or 14, further comprising:
tailoring (1102) the material composition of the radius filler (30) to obtain the second stiffness value.
